# EUROPEAN PATENT APPLICATION

(11) **EP 3 226 552 A1**
(43) Date of publication of application: **04.10.2017**
(21) Application number: 15863177.0
(22) Date of filing: 05.08.2015
(51) Int. Cl.: H04N 7/15, H04N 7/24

(54) **MULTI-SCREEN PROCESSING METHOD, MULTI CONTROL UNIT AND VIDEO SYSTEM**

(30) Priority: 27.11.2014 CN 201410707407
(71) Applicant: ZTE Corporation, Shenzhen, Guangdong 518057 (CN)
(72) Inventor: CHEN, Jun, Shenzhen Guangdong 518057 (CN); FAN, Xutong, Shenzhen Guangdong 518057 (CN); HUANG, Qiang, Shenzhen Guangdong 518057 (CN)
(74) Representative: Mozzi, Matteo
(86) International application number: PCT/CN2015/086162
(87) International publication number: WO 2016/082578

(57) **Abstract**

Provided is a multi-picture processing method, a Multi Control Unit (MCU) and a video system. The method includes: each MCU of one or more MCUs conducts, according to a multi-picture layout, zooming composition on a video image, which is in the multi-picture layout, of a terminal of the MCU; each MCU encodes and sends the composited video image; an endpoint MCU decodes the composited video image, which is received by the endpoint MCU and sent by each MCU, and extracts the video image of the terminal of each MCU; and the endpoint MCU composites, according to the multi-picture layout, the extracted video image and a video image of a terminal of the endpoint MCU, and sends the composited video image. The present disclosure solves the problem in the related art caused by achieving a multi-picture function via a simple multi-channel cascade connection, thereby saving bandwidth resources.

## Description

### Technical Field

The present disclosure relates to the field of communications, and more particularly to a multi-picture processing method, an MCU and a video system.

### Background

Multi-point video communication demands grow increasingly, the capacity of each central device is limited, multiple central devices need to be cascaded to solve the capacity problem, and the central device may also be referred to as an MCU.

At present, a multi-picture function is usually used in a multi-point video communication. In the related art, the multi-picture function is achieved on the basis of multiple points inside each central device (MCU). In a cascade connection, bandwidths between the central devices (MCU) are limited, there is only a bandwidth of one path of image generally, and it is difficult to achieve multi-picture functions for multiple sub-pictures at different central devices. There are multiple solutions for the problem. For example, the simplest solution is a multi-channel cascade connection. This solution sacrifices bandwidths between central devices.

Any effective solution has not been proposed at present for the problem in the related art caused by achieving a multi-picture function via a simple multi-channel cascade connection.

### Summary

The embodiments of the present disclosure provide a multi-picture processing method, an MCU and a video system, which are used to at least solve the problem in the related art caused by achieving a multi-picture function via a simple multi-channel cascade connection.

According to an embodiment of the present disclosure, a multi-picture processing method is provided, which may include: each MCU of one or more MCUs conducts, according to a multi-picture layout, zooming composition on a video image, which is in the multi-picture layout, of a terminal of the MCU; each MCU encodes and sends the composited video image; an endpoint MCU decodes the composited video image, which is received by the endpoint MCU and sent by each MCU, and extracts the video image of the terminal of each MCU; and the endpoint MCU composites, according to the multi-picture layout, the extracted video image and a video image of a terminal of the endpoint MCU, and sends the composited video image.

In one exemplary embodiment, the method may further include: negotiating, according to a predetermined rule, to determine one of multiple MCUs as the endpoint MCU.

In one exemplary example, the predetermined rule may include at least one of: selecting an MCU to which a specific terminal couples as the endpoint MCU, selecting an MCU with a maximum bandwidth as the endpoint MCU, selecting an MCU with a maximum operation processing capability as the endpoint MCU, selecting an MCU with largest number of idle resources as the endpoint MCU, and determining the endpoint MCU according to settings of an administrator.

In one exemplary embodiment, the method may further include: the endpoint MCU acquires bandwidth resources available to each MCU; and the act that each MCU encodes and sends the composited video image may include: each MCU encodes and sends the composited video image according to a bandwidth available to the MCU.

In one exemplary embodiment, the act that the endpoint MCU composites, according to the multi-picture layout, the extracted video image and the video image of the terminal of the endpoint MCU, and sends the composited video image may include: the endpoint MCU acquires multi-picture information of an additional MCU, wherein the multi-picture information is used for representing video images of terminals required by the additional MCU; and the endpoint MCU composites, according to the multi-picture information and the multi-picture layout, the video images of the terminals required by the additional MCU, and sends the composited video image to the terminals and/or an MCU requiring the composited video image.

According to another embodiment of the present disclosure, a multi-picture processing method is provided, which may include: an MCU conducts, according to a multi-picture layout, zooming composition on a video image, which is in the multi-picture layout, of a terminal of the MCU, and encodes and sends the composited video image; or, the MCU receives a video image sent by one or more other MCUs and composited according to the multi-picture layout, decodes the received video image, extracts a video image of a terminal of the one or more other MCUs, composites, according to the multi-picture layout, the extracted video image and the video image of the terminal of the MCU, and sends the composited video image.

In one exemplary embodiment, the method may further include: the MCU negotiates with the one or more other MCUs according to a predetermined rule, and determines an MCU as an endpoint MCU; when the MCU does not serve as the endpoint MCU, the MCU conducts, according to the multi-picture layout, zooming composition on the video image, which is in the multi-picture layout, of the terminal of the MCU, and encodes and sends the composited video image; when the MCU serves as the endpoint MCU, the MCU receives the video image sent by the one or more other MCUs and composited according to the multi-picture layout, decodes the received video image, extracts the video image of the terminal of the one or more other MCUs, composites, according to the multi-picture layout, the extracted video image and the video image of the terminal of the MCU, and sends the composited video image.

In one exemplary embodiment, the predetermined rule may include at least one of: selecting an MCU to which a specific terminal couples as the endpoint MCU, selecting an MCU with a maximum bandwidth as the endpoint MCU, selecting an MCU with a maximum operation processing capability as the endpoint MCU, selecting an MCU with largest number of idle resources as the endpoint MCU, and determining the endpoint MCU according to settings of an administrator.

In one exemplary embodiment, the act that the MCU encodes and sends the composited video image may include: the MCU encodes and sends the composited video image according to a bandwidth available to the MCU, wherein the bandwidth available to the MCU is determined by the endpoint MCU.

In one exemplary embodiment, the act that the MCU composites, according to the multi-picture layout, the extracted video image and the video image of the terminal of the terminal of the MCU, and sends the composited video image may include: the MCU acquires multi-picture information of an additional MCU, wherein the multi-picture information is used for representing video images of terminals required by the additional MCU; and the MCU composites, according to the multi-picture information and the multi-picture layout, the video images of the terminals required by the additional MCU, and sends the composited video image to the terminals and/or an MCU requiring the composited video image.

According to another embodiment of the present disclosure, an MCU is provided, which may include: a first processing component, arranged to conduct, according to a multi-picture layout, zooming composition on a video image, which is in the multi-picture layout, of a terminal of the MCU, and encode and send the composited video image; and/or, a second processing component, arranged to receive a video image sent by one or more other MCUs and composited according to the multi-picture layout, decode the received video image, extract a video image of a terminal of the one or more other MCUs, composite, according to the multi-picture layout, the extracted video image and the video image of the terminal of the MCU, and send the composited video image.

In one exemplary embodiment, the MCU may further include: a negotiation component, arranged to negotiate with the one or more other MCUs according to a predetermined rule, and determine an MCU as an endpoint MCU, wherein when the MCU does not serve as the endpoint MCU, the first processing component may be enabled; and when the condition that the MCU serves as the endpoint MCU, the second processing component may be enabled.

In one exemplary embodiment, the predetermined rule may include at least one of: selecting an MCU to which a specific terminal couples as the endpoint MCU, selecting an MCU with a maximum bandwidth as the endpoint MCU, selecting an MCU with a maximum operation processing capability as the endpoint MCU, selecting an MCU with largest number of idle resources as the endpoint MCU, and determining an endpoint MCU according to settings of an administrator.

In one exemplary embodiment, the first processing component may be arranged to encode and send the composited video image according to a bandwidth available the MCU, wherein the bandwidth available to the MCU is determined by the endpoint MCU.

In one exemplary embodiment, the second processing component may be arranged to acquire multi-picture information of an additional MCU, wherein the multi-picture information is used for representing video images of terminals required by the additional MCU; and composite, according to the multi-picture information and the multi-picture layout, the video images of the terminals required by the additional MCU, and send the composited video image to the terminals and/or an MCU requiring the composited video image.

According to another embodiment of the present disclosure, a video system is provided, which may include: at least two multi-point controllers, wherein one of the at least two multi-point controllers is equipped with the above-mentioned second processing component, and the other multi-point controllers are equipped with the above-mentioned first processing component.

By means of the embodiments of the present disclosure, each MCU of one or more MCUs conducts, according to a multi-picture layout, zooming composition on a video image, which is in the multi-picture layout, of a terminal of the MCU; each MCU encodes and sends the composited video image; an endpoint MCU decodes the composited video image, which is received by the endpoint MCU and sent by each MCU, and the endpoint MCU extracts the video image of the terminal of each MCU; and the endpoint MCU composites, according to the multi-picture layout, the extracted video image and a video image of a terminal of the endpoint MCU, and sends the composited video image. The problem in the related art caused by achieving a multi-picture function via a simple multi-channel cascade connection is solved, thereby saving bandwidth resources.

### Brief Description of the Drawings

The drawings described herein are used to provide further understanding of the present disclosure, and form a part of the present application. The schematic embodiments and description of the present disclosure are used to explain the present disclosure, and do not form improper limits to the present disclosure. In the drawings:
Fig. 1 is a flowchart of a multi-picture processing method according to an embodiment of the present disclosure;
Fig. 2 is a structure diagram of an MCU according to an embodiment of the present disclosure;
Fig. 3 is an optional structure diagram of an MCU according to an embodiment of the present disclosure;
Fig. 4 is an optional networking diagram according to an embodiment of the present disclosure;
Fig. 5 is an optional diagram of a multi-picture layout according to an embodiment of the present disclosure;
Fig. 6 is an optional diagram where each MCU conducts zooming composition according to a layout after decoding a terminal of each MCU according to an embodiment of the present disclosure;
Fig. 7 is another optional networking diagram 1 according to an embodiment of the present disclosure;
Fig. 8 is another optional diagram of a multi-picture layout according to an embodiment of the present disclosure;
Fig. 9 is another optional diagram 1 of zooming composition according to a layout according to an embodiment of the present disclosure;
Fig. 10 is another optional networking diagram 2 according to an embodiment of the present disclosure; and
Fig. 11 is another optional diagram 2 of zooming composition according to a layout according to an embodiment of the present disclosure.

### Detailed Description of the Embodiments

It is important to note that embodiments in the present application and features in the embodiments may be combined under the condition of no conflicts. The present invention disclosure will be illustrated hereinbelow with reference to the drawings and in conjunction with the embodiments in detail.

The acts shown in the flowchart of the drawings may be executed in a computer system including, for example, a set of computer-executable instructions. Moreover, although a logic sequence is shown in the flowchart, the shown or described acts may be executed in a sequence different from the sequence here under certain conditions. 'First' and 'second' in the following embodiments are only used for distinguishing, and not used for limiting the sequence.

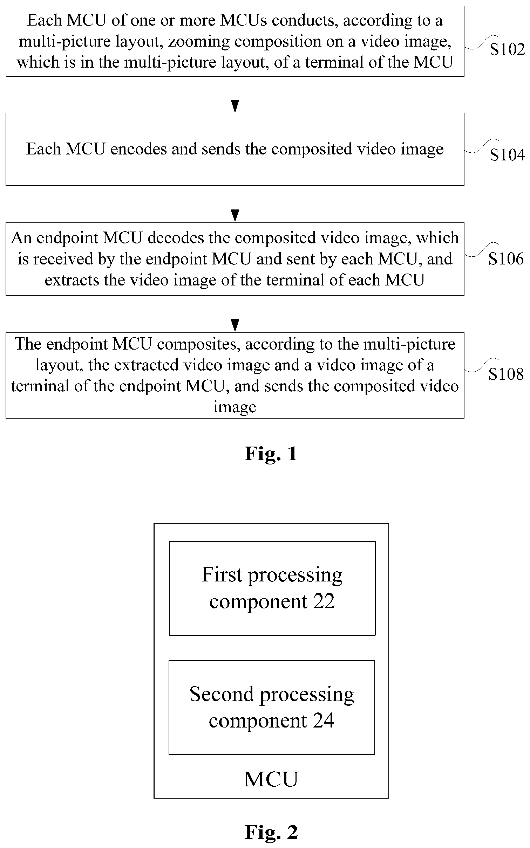

In the present embodiment, a multi-picture processing method is provided. Fig. 1 is a flowchart of a multi-picture processing method according to an embodiment of the present disclosure. As shown in Fig. 1, the flow includes the acts as follows.

At act S102, each MCU of one or more MCUs conducts, according to a multi-picture layout, zooming composition on a video image, which is in the multi-picture layout, of a terminal of the MCU.

At act S104, each MCU encodes and sends the composited video image.

At act S106, an endpoint MCU decodes the composited video image, which is received by the endpoint MCU and sent by each MCU, and extracts the video image of the terminal of each MCU.

At act S108, the endpoint MCU composites, according to the multi-picture layout, the extracted video image and a video image of a terminal of the endpoint MCU, and sends the composited video image.

A simple multi-channel cascade connection way is adopted in the related art. Thus, each MCU will directly send the video image of each terminal of the MCU to the endpoint MCU without processing, thereby wasting bandwidths of the endpoint MCU. By means of the above-mentioned acts, zooming composition is conducted according to the multi-picture layout by utilizing the video processing capability of the MCU, and then the composited video image is sent to the endpoint MCU. Compared to the processing way in the related art, the consumption of bandwidth resources is reduced in the above-mentioned method.

In an exemplary embodiment, each MCU may have functions of the endpoint MCU and functions of a slave MCU (in the present embodiment, for convenience of description, other MCUs except for the endpoint MCU are referred to as slave MCUs). Thus, it may be negotiated which MCU is determined from multiple MCUs to serve as the endpoint MCU according to a predetermined rule.

For example, an MCU to which a specific terminal couples is selected as the endpoint MCU, and an MCU with a maximum bandwidth may be selected as the endpoint MCU. For another example, an MCU with a maximum operation processing capability may be selected as the endpoint MCU. Under a certain circumstance, an MCU with a large bandwidth and a strong calculating capability undertakes more processing tasks, and possesses few idle resources. Therefore, as an optional mode, an MCU with largest number of idle resources may be selected as the endpoint MCU. Certainly, for simpler implementation, the endpoint MCU may be determined according to settings of an administrator. These rules may be used cooperatively or independently. During practical application, at least one of these rules may be selected according to the situation of each MCU in a network or a network architecture. Certainly, these rules are only an illustration, not for limiting the present disclosure.

The endpoint MCU needs to receive video images sent by multiple MCUs, so bandwidth resources of the endpoint MCU may be consumed. As an optional implementation mode, the endpoint MCU determines bandwidth resources available to each MCU in order to better control own bandwidth resources. Then, each MCU encodes and sends the composited video image according to the a bandwidth available to the MCU. By means of the optional implementation mode, the bandwidth resources of the endpoint MCU may be controllable to a certain extent.

A mode for saving bandwidth resources is not limited to the above-mentioned optional implementation mode, and may flexibly conduct processing according to actual requirements. For example, although there are video images of nine terminals in a multi-picture layout, a terminal of a certain MCU only expects to view the video images of six of the terminals. Under this circumstance, the endpoint MCU may receive information sent by the MCU, wherein the information is used for representing video images of terminals required by the slave MCU. The endpoint MCU composites, according to the information and the multi-picture layout, the video images of the terminals required by the slave MCU, and sends the composited video image to the terminals and/or an MCU requiring the composited video image. The processing mode may further save bandwidths, and may make the slave MCU obtain the terminal images required by the slave MCU.

In the above-mentioned embodiment, the MCU may only have functions of the slave MCU, or may only have functions of the endpoint MCU, or may certainly have functions of both the endpoint MCU and the slave MCU. In the present embodiment, another multi-picture processing method is also provided. The principle of the method is the same as that of the method shown in Fig. 1. Differently, the method describes the multi-picture processing method from the perspective of an MCU. The method includes:
an MCU conducts, according to a multi-picture layout, zooming composition on a video image, which is in the multi-picture layout, of a terminal of the MCU, and encodes and sends the composited video image; or, the MCU receives a video image sent by one or more other MCUs and composited according to the multi-picture layout, decodes the received video image, extracts a video image of a terminal of the one or more other MCUs, composites, according to the multi-picture layout, the extracted video image and the video image of the terminal of the MCU, and sends the composited video image.

In an exemplary embodiment, the MCU negotiates with the one or more other MCUs according to a predetermined rule, and determines an MCU as an endpoint MCU; when the MCU does not serve as the endpoint MCU, the MCU conducts, according to the multi-picture layout, zooming composition on the video image, which is in the multi-picture layout, of the terminal of the MCU, and encodes and sends the composited video image; when the MCU serves as the endpoint MCU, the MCU receives the video image sent by the one or more other MCUs and composited according to the multi-picture layout, decodes the received video image, extracts the video image of the terminal of the one or more other MCUs, composites, according to the multi-picture layout, the extracted video image and the video image of the terminal of the MCU, and sends the composited video image.

In an exemplary embodiment, the predetermined rule includes at least one of the followings: selecting an MCU to which a specific terminal couples as the endpoint MCU, selecting an MCU with a maximum bandwidth as the endpoint MCU, selecting an MCU with a maximum operation processing capability as the endpoint MCU, selecting an MCU with largest number of idle resources as the endpoint MCU, and determining the endpoint MCU according to settings of an administrator.

Optionally, as a slave MCU, the MCU may encode and send the composited video image according to a bandwidth available to the MCU, wherein the bandwidth available to the MCU is determined by the endpoint MCU.

Optionally, as an endpoint MCU, the MCU receives multi-picture information of an additional MCU, wherein the multi-picture information is used for representing video images of terminals required by the additional MCU; and the MCU composites, according to the multi-picture information and the multi-picture layout, the video images of the terminals required by the additional MCU, and sends the composited video image to the terminals and/or an MCU requiring the composited video image.

In the present embodiment, an MCU is also provided. Fig. 2 is a structure diagram of an MCU according to an embodiment of the present disclosure. As shown in Fig. 2, the MCU includes: a first processing component 22 and/or a second processing component 24, wherein the first processing component 22 is arranged to conduct, according to a multi-picture layout, zooming composition on a video image, which is in the multi-picture layout, of a terminal of the MCU, and encode and send the composited video image; and the second processing component 24 is arranged to receive a video image sent by one or more other MCUs and composited according to the multi-picture layout, decode the received video image, extract a video image of a terminal of the one or more other MCUs, composite, according to the multi-picture layout, the extracted video image and the video image of the terminal of the MCU, and send the composited video image.

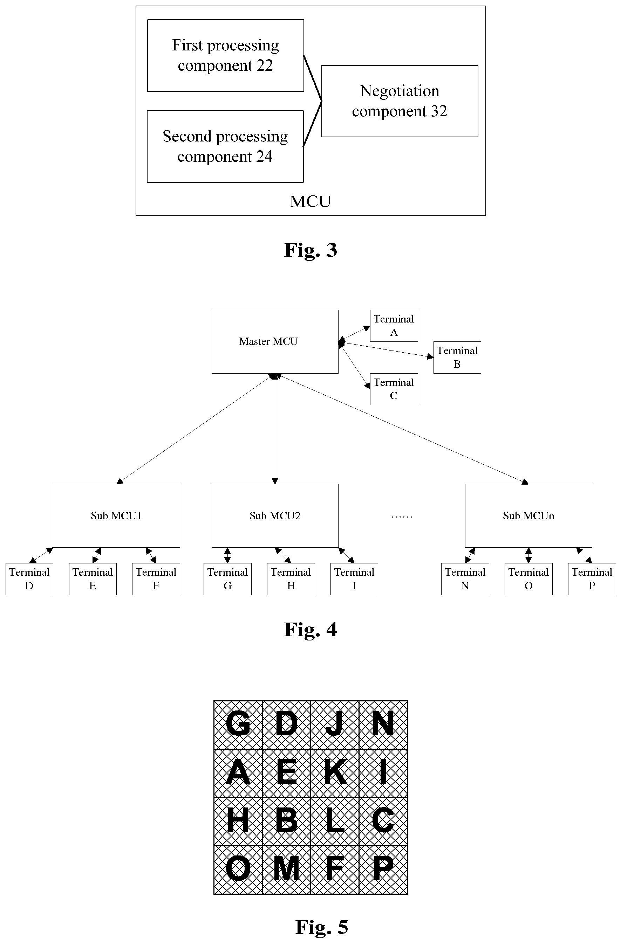

Fig. 3 is an optional structure diagram of an MCU according to an embodiment of the present disclosure. As shown in Fig. 3, the MCU may further include: a negotiation component 32, arranged to negotiate with the one or more other MCUs according to a predetermined rule, and determine an MCU as an endpoint MCU, wherein when the MCU does not serve as the endpoint MCU, the first processing component 22 is enabled, and when the MCU serves as the endpoint MCU, the second processing component 24 is enabled.

Optionally, the predetermined rule includes at least one of the followings: selecting an MCU to which a specific terminal couples as the endpoint MCU, selecting an MCU with a maximum bandwidth as the endpoint MCU, selecting an MCU with a maximum operation processing capability as the endpoint MCU, selecting an MCU with largest number of idle resources as the endpoint MCU, and determining an endpoint MCU according to settings of an administrator.

In an optional implementation mode, the first processing component 22 is arranged to encode and send the composited video image according to a bandwidth available the MCU, wherein the bandwidth available to the MCU is determined by the endpoint MCU.

In another optional implementation mode, the second processing component 24 is arranged to acquire multi-picture information of an additional MCU, wherein the multi-picture information is used for representing video images of terminals required by the additional MCU; and composite, according to the multi-picture information and the multi-picture layout, the video images of the terminals required by the additional MCU, and send the composited video image to the terminals and/or an MCU requiring the composited video image.

In the present embodiment, a video system is also provided, which includes: at least two multi-point controllers, wherein one of the at least two multi-point controllers is equipped with the above-mentioned second processing component 24, and the other multi-point controllers are equipped with the above-mentioned first processing component 22.

The above-mentioned optional implementation modes may be used cooperatively or independently.

Fig. 4 is an optional networking diagram according to an embodiment of the present disclosure. The method shown in Fig. 4 is simple and easy to operate. That is, bandwidths are not increased, and compared with a single-stage multi-picture method, the method shown in Fig. 4 does not consume more encoding and decoding resources. Fig. 4 will be adopted for illustration hereinbelow. In Fig. 4, an endpoint MCU may be referred to as a master MCU (the MCU is referred to as an endpoint MCU or a master MCU without forming limits, as long as the MCU can achieve corresponding functions); multiple sub MCUs (the sub MCUs are also referred to as slave MCUs namely MCU1 to MCUn) are further provided, and each MCU has one or more terminals such as a terminal A to a terminal P.

A user selects a multi-picture layout; each MCU decodes a terminal of the MCU in the multi-picture layout; each MCU conducts zooming composition according to a layout after decoding the terminal of the MCU in the multi-picture layout; each sub MCU encodes the composited sub-picture image and then sends the composited sub-picture image to a cascade connection port; an endpoint MCU receives a code stream of each sub MCU; the endpoint MCU decodes the code stream of each sub MCU, extracts each sub-picture image, and splices the sub-picture image with a composited picture image of the present MCU to form a complete multi-picture image; the endpoint MCU encodes the complete multi-picture image and then sends the complete multi-picture image to each terminal and each sub MCU of the endpoint MCU; and each sub MCU forwards a multi-picture code stream to each terminal of the MCU.

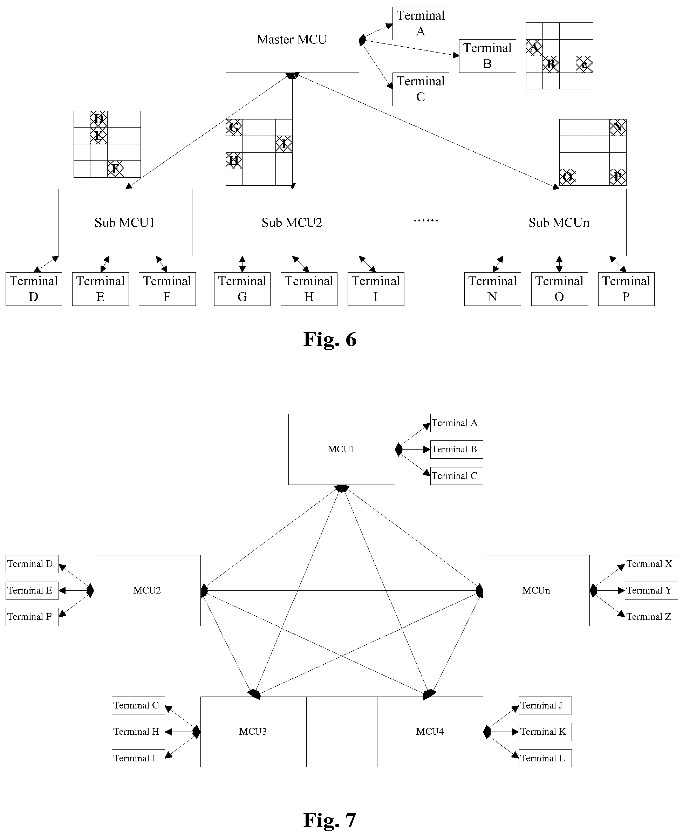

Fig. 5 is an optional diagram of a multi-picture layout according to an embodiment of the present disclosure. A user may select a multi-picture layout shown in Fig. 5, and then each MCU decodes a terminal of the MCU in the multi-picture layout; each MCU conducts zooming composition according to a layout after decoding the terminal of the MCU in the multi-picture layout, as shown in Fig. 6; each sub MCU encodes the composited sub-picture image and then sends the composited sub-picture image to a cascade connection port; an endpoint MCU receives a code stream of each sub MCU; the endpoint MCU decodes the code stream of each sub MCU, extracts each sub-picture image, and splices the sub-picture image with a composited picture image of the present MCU to form a complete multi-picture image, wherein the complete multi-picture image is shown in Fig. 5; the endpoint MCU encodes the complete multi-picture image and then sends the complete multi-picture image to each terminal and each sub MCU of the endpoint MCU; and each sub MCU forwards a multi-picture code stream to each terminal of the MCU.

Fig. 7 is another optional networking diagram 1 according to an embodiment of the present disclosure. As shown in Fig. 7, all MCUs form a cross connection instead of a tree cascade connection, and each MCU may directly acquire images of other MCUs.

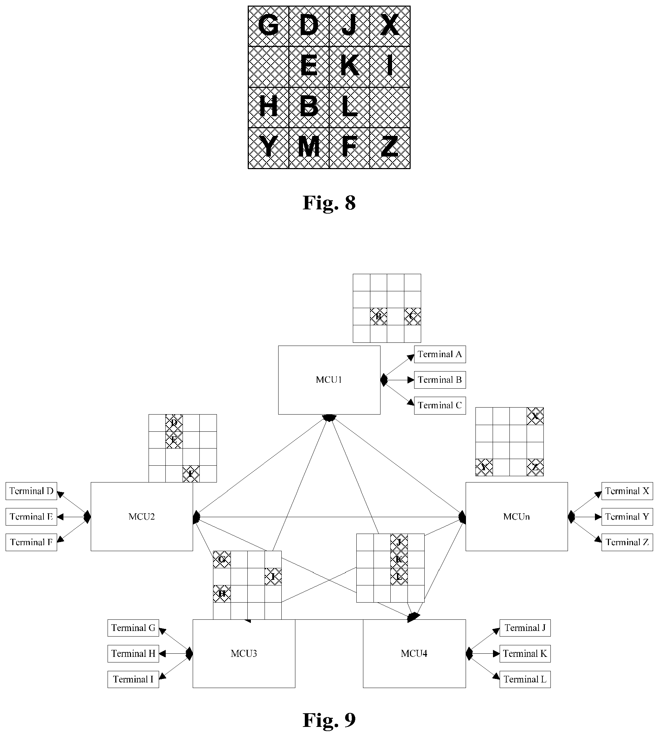

When a specific terminal such as a terminal A expects to view a multi-picture layout as shown in Fig. 8, it is necessary to acquire composited picture images of other terminals, so an MCU namely MCU1 to which the terminal A couples is selected as an endpoint MCU. Each MCU decodes a terminal of the MCU in the multi-picture layout; each MCU conducts zooming composition according to a layout after decoding the terminal of the MCU in the multi-picture layout; each sub MCU encodes the composited sub-picture image and then sends the composited sub-picture image to a cascade connection port; the endpoint MCU receives a code stream of each sub MCU; the endpoint MCU decodes the code stream of each sub MCU, extracts each sub-picture image, and splices the sub-picture image with a composited picture image of the present MCU to form a complete multi-picture image; and the endpoint MCU encodes the complete multi-picture image and then sends the complete multi-picture image to the terminal A of the endpoint MCU.

Fig. 9 is another optional diagram 1 of zooming composition according to a layout according to an embodiment of the present disclosure. As shown in Fig. 9, MCU2-MCUn encode composited sub-picture images and then send the composited sub-picture images to MCU1 through a cascade connection port. MCU1 decodes all code streams of MCU2-MCUn, extracts each sub-picture image, and splices the sub-picture images with a composited picture image of the present MCU to form a complete multi-picture image, wherein the complete multi-picture image is shown in Fig. 8. MCU1 encodes the complete multi-picture image and then sends the complete multi-picture image to a terminal A.

For terminals B and C, MCU1 is also selected as an endpoint MCU. The data of the terminals B and C are replaced with the data of the terminal A during multi-picture composition so that the multi-picture image viewed by each terminal does not contain its own picture. For terminals D, E and F, MCU2 is selected as an endpoint MCU. The above operations are repeated. Finally, each terminal can view the multi-picture in which its own picture is not contained.

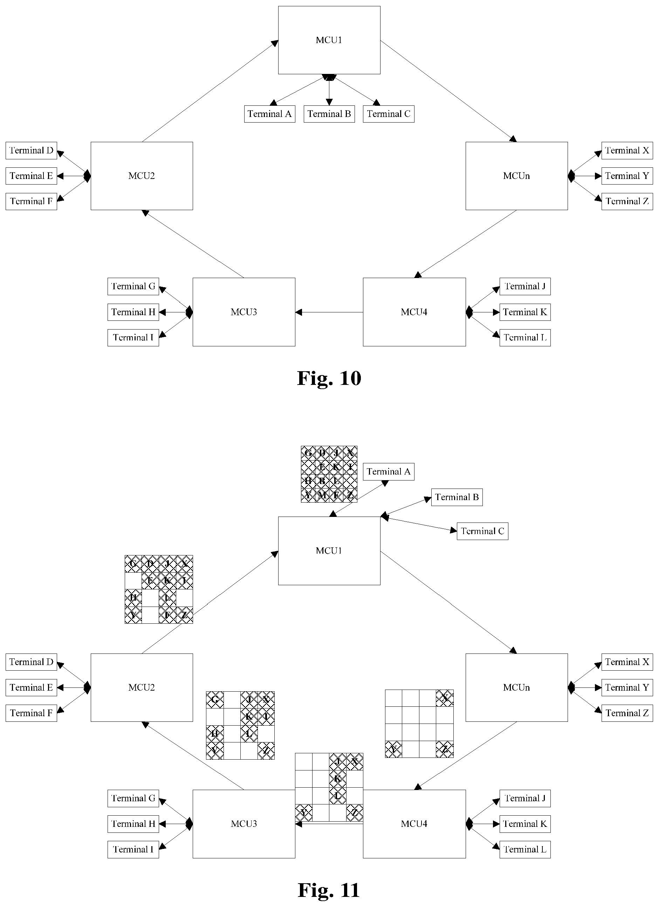

Fig. 10 is another optional networking diagram 2 according to an embodiment of the present disclosure. As shown in Fig. 10, all MCUs are connected annularly. MCUn sends a multi-picture image to MCU4; MCU4 sends a multi-picture image to MCU3; MCU3 sends a multi-picture image to MCU2; and MCU2 sends a multi-picture image to MCU1, so as to form a loop. Each MCU may acquire a multi-picture image of another MCU from the loop.

Fig. 11 is another optional diagram 2 of zooming composition according to a layout according to an embodiment of the present disclosure. Each MCU superposes local terminal images with the received multi-picture image, and sends the superposed image to a next MCU. When a specific terminal such as a terminal A expects to view a multi-picture layout as shown in Fig. 8, it is necessary to acquire composited multi-picture images of other terminals. MCUn composites the decoded images of local terminals X, Y and Z, and then sends the composited multi-picture image to MCU4. MCU4 composites the decoded images of local terminals J, K and L, and then sends the composited multi-picture image to MCU3. MCU3 composites the decoded images of local terminals G, H and I, and then sends the composited multiple-picture image to MCU2. MCU2 composites the decoded images of local terminals D, E and F, and then sends the composited multi-pictures image to MCU1. MCU1 superposes the received composited multi-picture image with images of local terminals B and C, and sends the composited image to the terminal A. The solution is applied to a scenario where the sizes of all sub pictures in the multi-picture layout are identical, so each terminal may obtain all sub pictures in the loop. Finally, each terminal can view multiple pictures in which its own picture is not contained.

By means of the above-mentioned embodiments, zooming composition is conducted according to a multi-picture layout by utilizing the video processing capability of an MCU, and then the composited video image is sent to an endpoint MCU, thus reducing consumption of bandwidth resources.

The descriptions above are only the exemplary embodiment of the present disclosure, which are not used to restrict the present disclosure. For those skilled in the art, the present disclosure may have various changes and variations. Any amendments, equivalent substitutions, improvements, etc. within the principle of the present disclosure are all included in the scope of the protection of the present disclosure.

### Industrial Applicability

By means of the above-mentioned technical solution provided in the present disclosure, each MCU of one or more MCUs conducts, according to a multi-picture layout, zooming composition on a video image, which is in the multi-picture layout, of a terminal of the MCU; each MCU encodes and sends the composited video image; an endpoint MCU decodes the composited video image, which is received by the endpoint MCU and sent by each MCU, and the endpoint MCU extracts the video image of the terminal of each MCU; and the endpoint MCU composites, according to the multi-picture layout, the extracted video image and a video image of a terminal of the endpoint MCU, and sends the composited video image. The problem in the related art caused by achieving a multi-picture function via a simple multi-channel cascade connection is solved, thereby saving bandwidth resources.

## Claims

1. A multi-picture processing method, comprising:
conducting, by each Multi Control Units, MCU, of one or more MCUs, according to a multi-picture layout, zooming composition on a video image, which is in the multi-picture layout, of a terminal of the MCU;
encoding and sending, by each MCU, the composited video image;
decoding, by an endpoint MCU, the composited video image, which is received by the endpoint MCU and sent by each MCU, and extracting, by the endpoint MCU, the video image of the terminal of each MCU; and
compositing, by the endpoint MCU, according to the multi-picture layout, the extracted video image and a video image of a terminal of the endpoint MCU, and sending, by the endpoint MCU, the composited video image.

2. The method as claimed in claim 1, further comprising:
negotiating, according to a predetermined rule, to determine one of multiple MCUs as the endpoint MCU.

3. The method as claimed in claim 2, wherein the predetermined rule comprises at least one of: selecting an MCU to which a specific terminal couples as the endpoint MCU, selecting an MCU with a maximum bandwidth as the endpoint MCU, selecting an MCU with a maximum operation processing capability as the endpoint MCU, selecting an MCU with largest number of idle resources as the endpoint MCU, and determining the endpoint MCU according to settings of an administrator.

4. The method as claimed in any one of claims 1 to 3, wherein
the method further comprises: acquiring, by the endpoint MCU, bandwidth resources available to each MCU; and
encoding and sending, by each MCU, the composited video image comprises:
encoding and sending, by each MCU, the composited video image according to a bandwidth available to the MCU.

5. The method as claimed in any one of claims 1 to 3, wherein compositing, by the endpoint MCU, according to the multi-picture layout, the extracted video image and the video image of the terminal of the endpoint MCU, and sending, by the endpoint MCU, the composited video image comprises:
acquiring, by the endpoint MCU, multi-picture information of an additional MCU, wherein the multi-picture information is used for representing video images of terminals required by the additional MCU; and
compositing, by the endpoint MCU, according to the multi-picture information and the multi-picture layout, the video images of the terminals required by the additional MCU, and sending, by the endpoint MCU, the composited video image to the terminals and/or an MCU requiring the composited video image.

6. A multi-picture processing method, comprising:
conducting, by a Multi Control Unit, MCU, according to a multi-picture layout, zooming composition on a video image, which is in the multi-picture layout, of a terminal of the MCU, and encoding and sending, by the MCU, the composited video image; or,
receiving, by the MCU, a video image sent by one or more other MCUs and composited according to the multi-picture layout, decoding, by the MCU, the received video image, extracting, by the MCU, a video image of a terminal of the one or more other MCUs, compositing, by the MCU, according to the multi-picture layout, the extracted video image and the video image of the terminal of the MCU, and sending, by the MCU, the composited video image.

7. The method as claimed in claim 6, wherein
the method further comprises: negotiating, by the MCU, with the one or more other MCUs according to a predetermined rule, and determining, by the MCU, an MCU as an endpoint MCU;
when the MCU does not serve as the endpoint MCU, the MCU conducts, according to the multi-picture layout, zooming composition on the video image, which is in the multi-picture layout, of the terminal of the MCU, and encodes and sends the composited video image; and
when the MCU serves as the endpoint MCU, the MCU receives the video image sent by the one or more other MCUs and composited according to the multi-picture layout, decodes the received video image, extracts the video image of the terminal of the one or more other MCUs, composites, according to the multi-picture layout, the extracted video image and the video image of the terminal of the MCU, and sends the composited video image.

8. The method as claimed in claim 7, wherein the predetermined rule comprises at least one of: selecting an MCU to which a specific terminal couples as the endpoint MCU, selecting an MCU with a maximum bandwidth as the endpoint MCU, selecting an MCU with a maximum operation processing capability as the endpoint MCU, selecting an MCU with largest number of idle resources as the endpoint MCU, and determining the endpoint MCU according to settings of an administrator.

9. The method as claimed in any one of claims 6 to 8, wherein encoding and sending, by the MCU, the composited video image comprises:
encoding and sending, by the MCU, the composited video image according to a bandwidth available to the MCU, wherein the bandwidth available to the MCU is determined by the endpoint MCU.

10. The method as claimed in any one of claims 6 to 8, wherein compositing, by the MCU, according to the multi-picture layout, the extracted video image and the video image of the terminal of the terminal of the MCU, and sending, by the MCU, the composited video image comprises:
acquiring, by the MCU, multi-picture information of an additional MCU, wherein the multi-picture information is used for representing video images of terminals required by the additional MCU; and
compositing, by the MCU, according to the multi-picture information and the multi-picture layout, the video images of the terminals required by the additional MCU, and sending the composited video image to the terminals and/or an MCU requiring the composited video image.

11. A Multi Control Unit, MCU, wherein the MCU comprises:
a first processing component, arranged to conduct, according to a multi-picture layout, zooming composition on a video image, which is in the multi-picture layout, of a terminal of the MCU, and encode and send the composited video image; and/or,
a second processing component, arranged to receive a video image sent by one or more other MCUs and composited according to the multi-picture layout, decode the received video image, extract a video image of a terminal of the one or more other MCUs, composite, according to the multi-picture layout, the extracted video image and the video image of the terminal of the MCU, and send the composited video image.

12. The MCU as claimed in claim 11, further comprising:
a negotiation component, arranged to negotiate with the one or more other MCUs according to a predetermined rule, and determine an MCU as an endpoint MCU, wherein
when the MCU does not serve as the endpoint MCU, the first processing component is enabled; and
when the condition that the MCU serves as the endpoint MCU, the second processing component is enabled.

13. The MCU as claimed in claim 11, wherein the predetermined rule comprises at least one of: selecting an MCU to which a specific terminal couples as the endpoint MCU, selecting an MCU with a maximum bandwidth as the endpoint MCU, selecting an MCU with a maximum operation processing capability as the endpoint MCU, selecting an MCU with largest number of idle resources as the endpoint MCU, and determining an endpoint MCU according to settings of an administrator.

14. The MCU as claimed in any one of claims 11 to 13, wherein the first processing component is arranged to encode and send the composited video image according to a bandwidth available the MCU, wherein the bandwidth available to the MCU is determined by the endpoint MCU.

15. The MCU as claimed in any one of claims 11 to 13, wherein the second processing component is arranged to acquire multi-picture information of an additional MCU, wherein the multi-picture information is used for representing video images of terminals required by the additional MCU; and composite, according to the multi-picture information and the multi-picture layout, the video images of the terminals required by the additional MCU, and send the composited video image to the terminals and/or an MCU requiring the composited video image.

16. A video system, comprising: at least two multi-point controllers, wherein one of the at least two multi-point controllers is equipped with the second processing component as claimed in any one of claims 11 to 15, and the other multi-point controllers are equipped with the first processing component as claimed in any one of claims 11 to 15.
